# EUROPEAN PATENT APPLICATION

(11) **EP 1 359 758 A1**
(43) Date of publication of application: **05.11.2003**
(21) Application number: 02008424.0
(22) Date of filing: 12.04.2002
(51) Int. Cl.: H04N 7/167, H04N 1/44, H04N 7/26

(54) **Efficient encryption of image data**

(71) Applicant: Hewlett Packard Company, a Delaware Corporation, Palo Alto, CA 94304 (US)
(72) Inventor: Carbajal, John, 08021 Barcelona (ES)
(74) Representative: Yennadhiou, Peter

(57) **Abstract**

A level of security is applied to an object file by selecting sections of the file for encryption, whilst leaving other portions of the file unencrypted. For large files of the order of 5 to 100 megabytes or above, the whole file can be "spoiled" to a potential hacker, since parts of the complete file are either missing, or are protected by encryption. The file can be distributed in various ways, for example electronically by data transfer over a communications network or on a physical storage media or any confirmation thereof. The file may be split into encrypted and unencrypted portions or any combination thereof and sent as a series of separate packages either physical, for example loaded on a DVD and/or as electronic transmitted data files. Reconstitution of the original data file requires decryption of the encrypted sections, and access to both the encrypted and the unencrypted portions. In the best mode implementation, decryption of the file is left as late as possible in a chain of computer entities, so as to be as close as possible to a point of delivery of the file content as possible. By only partially encrypting a file, a trade off of security against data processing power required for decryption can be applied.

## Description

### Field of the Invention

The present invention relates to encryption of data, and particularly, although not exclusively to encryption of image data files having relatively large size, for example image posters and the like.

### Background to the Invention

It is known in the prior art to download image files over the internet to a users computer via a web-browser. Typically, such image files are relatively small in data size, however there are still significant delays due to the limited bitrate capacity of local loop internet connections, and data processing capacity of legacy computers connected to the internet. Content owners may wish to apply levels of encryption protection to image content, since there is value in such image content, which may also be legally protected by copyright. For relatively small images, such as thumbnail images or VDU screen sized images which will print on A4 size paper, and contained for example in JPEG files, delivery of encrypted JPEG files is known in the prior art. Download and processing times are of the order of a few seconds to a few minutes depending on the age of and processing capability of the receiving computer, and the bit rate capacity of the local loop internet connection.

For e-service applications, where an image data is being delivered as a product or service, it is known to encrypt an entire image file which is delivered to a receiving device, for example operated by a customer. The image file needs to be decrypted by the receiving device.

In US 5,703,951, there is disclosed a system for delivering encrypted data on a portable data storage media which may be physically delivered, and in which an access code is transmitted electronically from a location to enable a person receiving the portable data storage media to decrypt the received encrypted data, when in possession of both of the access code, and the encrypted data. The method in US 5,703,951 relies upon full encryption of data stored on the data storage media, which has to be decrypted at a destination device.

Prior art methods for encrypting JPEG image data involve applying a symmetric cipher over an entire image data. Whilst symmetric ciphers may be efficient compared to asymmetric ciphers, the fact that the entire image must be passed through a cipher incurs a further data processing delay in encrypting a file and requires data processing capacity at a receiving device. Consequently it is inefficient to encrypt large JPEG files or other image data files for transmission over a medium such as the Internet, where download and print times for files should be low. To make the medium practically usable for files having data sizes of 5 megabytes to 100 megabytes or above, the data processing capability required to decrypt a file at a receiving device significantly slows down the efficient receipt and processing of image data at the receiving device.

In WO 00/31964, there is disclosed a method of partial encryption of an image file, in which different levels of quality of image data are transmitted, where successively higher levels of quality image data are protected by successive levels of encryption. A low quality image data is left unencrypted, whereas a next level of medium quality image data is encrypted by a first encryption method and a high quality image data is encrypted by a second encryption method. In the system disclosed in WO 00/31964, where encryption is applied, this relies upon encryption of a whole image data.

Efficient coding techniques have been applied to streaming media such as those in MPEG format. Whilst the end goal may be the same as for JPEG encryption, i.e. efficient decryption, the motivations for MPEG format encryption is different. In MPEG systems, streaming media has to be rendered in real time and must meet quality of service constraints.

In contrast, JPEG files containing large still images have no such real time streaming restriction, and consequently in the prior art less effort has been placed in optimizing the encryption and decryption methods used for JPEG format files, compared with MPEG format files.

### Summary of the Invention

One object of specific implementations of the present invention is to decrease the time required, and the computing power required to decrypt an image file.

The inventors have realized that, whilst prior art encryption techniques provide high levels of security for data, there are certain types of data where absolute secrecy and security are not necessary essential, and where a level of security below full encryption of a whole data file can be applied such that some parts of the data file can be left unencrypted, whilst still for all practical purposes, making that data file useless to a person misappropriating the data file.

Since decrypting a complete image data file is computationally expensive, encryption and decryption delays can be reduced by leaving parts of the image data file unencrypted, but encrypting enough of the image data file that the unencrypted parts of the file are practically of little or no use to an unauthorised person acquiring those unencrypted parts or the whole file including encrypted and unencrypted parts.

The computing power required to apply encryption to a relatively large size image data file, to the extent that a person acquiring the encrypted image data file cannot practically make use of the image data file, can be reduced by encrypting only the parts of the file which are critical for rendering an image.

Specific implementations of the present invention aim to reduce the computing time and computing power required to decrypt an encrypted image, and thereby allow for incorporation of a decryption phase at a point of image rendering, without significantly decreasing performance or cost of an apparatus which renders an image data, for example a printer.

An authorised receiving device in receipt of a partially encrypted image data file may only need to apply decryption to the encrypted parts of the file, which requires less data processing power than if the same image data file were fully encrypted, and the whole of that image data file needed to be decrypted.

In one specific method, a data file contains a content data portion, and optionally a header portion. The content data portion comprises a data payload of the file, for example a poster image data. Part of the content data is encrypted, so that a person misappropriating the content data cannot make full use of the content data, since parts of the data are protected by encryption. An authorized recipient of the data can decrypt the encrypted content data portions, where an encryption method and key length are agreed beforehand between a sender of the data file and an receiver of the data file. A header portion may contain data describing the type of file, and other known parameters according to a particular file format selected.

In a variation of the first specific method, a header portion describes an encryption type used and a key length.

In the first specific method, the header portion only is encrypted. A person acquiring the file will not be able to read the header portion, and therefore will not be able to tell which encryption method is applied to the content data portion of the file, nor a file format which the content data is stored in.

In a second specific method, a file comprises a header data comprising information describing one or more encryption methods used to protect the file and one or more key lengths and optionally describing a file type, as well as data block lengths and positions, and a content data portion containing a content data payload. The header portion is encrypted, as well individual blocks selected from the content data. A person acquiring the file, needs to decrypt both the header portion and the encrypted data blocks from the content data in order to have full access to the content data.

In implementations in which a header is encrypted, it is necessary to be able to identify where the header begins and where the header ends. Some headers may be fixed in length, whereas some headers may be of a variable length. In the case of a variable length header, data describing the length of the encrypted header can be located in a predetermined position within a file, and the encrypted data of a described number of bytes forms the header data. Alternatively, the encrypted header can be identified by a begin header marker and an end header marker, in which case a receiving device needs to search for the begin and end markers, and decrypt the data between those markers to recover the header data.

Encrypted header bytes can be identified by a begin marker and an end marker.

According to a first aspect of the present invention, there is provided a method for applying security to a data file said data file comprising a content data portion;
said method comprising:
selecting at least one section of said data file;
applying at least one encryption algorithm to said at least one selected data section to obtain at least one encrypted data section, and at least one remaining unencrypted data section; and
sending said at least one encrypted data section, and sending said at least one remaining unencrypted data section.

According to a second aspect of the present invention, there is provided a method for secure management of a data file, said data file comprising a header portion and a content data portion, said header portion containing data describing at least one encryption type, said method comprising:
reading said header portion and extracting said data describing said encryption type ;
receiving at least one unencrypted section of said data file;
receiving at least one encrypted section of said data file;
decrypting said received at least one encrypted section of said data file according to an encryption type specified in said header data; and
combining said decrypted at least one section of said data file with said at least one unencrypted section of said data file, to obtain a full unencrypted version of said data file;
wherein said header portion contains data describing at least one encryption algorithm applied to said encrypted data section and at least one key length of a key for said encryption algorithm.

According to a third aspect of the present invention, there is provided a method for secure management of an image data file, said method comprising:
selecting at least one section of an image data file;
applying at least one encryption algorithm to said at least one selected data section to obtain at least one encrypted data section and at least one remaining unencrypted data section;
wherein said header portion contains data describing at least one encryption algorithm applied to said encrypted data section and at least one key length of a key for said encryption algorithm.

According to a fourth aspect of the present invention, there is provided a method for secure management of an image data file, said method comprising:
receiving at least one unencrypted section of said image data file;
receiving at least one encrypted section of said image data file;
decrypting said received at least one encrypted section of said image data file;
combining said decrypted at least one section of said image data file with said unencrypted section of said image data file;
wherein said header portion contains data describing at least one encryption algorithm applied to said encrypted data section and at least one key length of a key for said encryption algorithm.

The invention includes an apparatus for applying security to a data file, said apparatus comprising:
at least one data processor; and
at least one memory device;
said apparatus operable for:
   selecting at least one section of said data files;
   applying at least one encryption algorithm to said at least one selected data section to obtain at least one encrypted data section and at least one remaining unencrypted data section;
   sending said at lest one unencrypted data section of said data file to said output interface; and
   sending said at least one encrypted data section of said data file to said output interface;
wherein said header portion contains data describing at least one encryption algorithm applied to said encrypted data section and at least one key length of a key for said encryption algorithm.

The invention includes an apparatus for secure management of a data file, said apparatus comprising:
at least one processor;
at least one memory device; and
an input interface;
said apparatus operable for:
   receiving at least one unencrypted section of said data file;
   receiving at least one encrypted section of said data file;
   applying a decryption algorithm to said received at least one encrypted section of said data file, to obtain a decrypted section of said data file; and
   combining said at least one decrypted section of said data file with said unencrypted section of said data file, to obtain a full unencrypted version of said data file;
wherein said header portion contains data describing at least one encryption algorithm applied to said encrypted data section and at least one key length of a key for said encryption algorithm.

The invention includes a printer device capable of secure management of an image data file, said printer device comprising:
an input interface for receiving at least one said image data file;
at least one data processor;
at least one memory device;
a raster image processor; and
a print mechanism;
said printer device operable for:
   receiving at least one unencrypted section of said image data file;
   receiving at least on encrypted section of said image data file;
   decrypting said received at least one encrypted section of said image data file to obtain a decrypted section; and
   combined said at least one decrypted section of said image data file with said at least one unencrypted section of said image data file to obtain an unencrypted version of said data file;
   raster image processing said full unencrypted version of said data file to obtain a raster image processed file; and
   printing a data content of said raster image processed file onto a print media;
wherein a header portion of said data file contains data describing at least one encryption algorithm applied to said encrypted data section and at least one key length of a key for said encryption algorithm..

The invention includes a method for secure management of a data file, said method comprising;
selecting at least one section of a said data file;
applying at least one encryption algorithm to said at least one selected data section to obtain at least one encrypted data section and at least one remaining data section;
sending said unencrypted at least one data section of said data file;
sending said at least one encrypted data section of said data file;
receiving said at least one unencrypted section of said data file;
receiving said at least one encrypted section of said data file;
decrypting said received at least one encrypted section of said data file to obtain a decrypted section of said data file;
combining said at least one said decrypted section of said data file with said at least one unencrypted section of said data file to obtain a full unencrypted version of said data file;
wherein a header portion of said data file contains data describing at least one encryption algorithm applied to said encrypted data section and at least one key length of a key for said encryption algorithm.

The invention includes a system for applying security to a data file, said system comprising:
at least one sending entity, for sending a data file to which securing has been applied;
at least one receiving computer entity for receiving said data file, and for removing said security from said data file;
said sending computer entity comprising:
   at least one data processor; and
   at least one memory device; and
   at least one output interface for output of said data file,
   said sending computer entity operating for:
      selecting at least one section of said data file;
      applying at least one encryption algorithm to said at least one selected data section to obtain at least one encrypted data section and at least one remaining unencrypted data section;
      sending said at least one unencrypted data section of said data file via said output interface; and
      sending said at least one encrypted data section of said data file via said output interface;
      said receiving computer entity comprising:
         at least one data processor;
         at least one memory device; and
         at least one input interface;
         said receiving computer entity operating for:
            receiving said at least one unencrypted of said data file;
            receiving said at least one encrypted section of said data file;
            decrypting said received at least one encrypted section of said data file to obtain a decrypted section of said data file; and
            combining said decrypted so that at least one said decrypted section of said data with said at least one unencrypted section of said data file to obtain a full unencrypted version of said data file;
wherein a header portion of said data file contains data describing at least one encryption algorithm applied to said encrypted data section and at least one key length of a key for said encryption algorithm.

The invention includes a data file comprising:
a header portion; and
a content data portion;
wherein said data file comprises at least one encrypted section and at least one unencrypted section;
wherein said header portion contains data describing at least one encryption algorithm applied to said encrypted data section and at least one key length of a key for said encryption algorithm.

The invention includes a data storage medium carrying a data file, said data storage medium containing:
a header portion, describing a format of said data file;
a data content section comprising a payload data of said image data file;
wherein at least one section of said data file is encrypted, and
at least one section of said data file remains unencrypted;
wherein said header portion contains data describing at least one encryption algorithm applied to said encrypted data section and at least one key length of a key for said encryption algorithm.

According to a fifth aspect of the present invention there is provided a format for sending data file, said format comprising;
an encrypted header data;
a begin header data marker identifying a beginning of said encrypted header data;
an end header data marker identifying an end of said encrypted header data ;
a portion of encrypted content data; and
a portion of unencrypted content data.

According to a sixth aspect of the present invention there is provided a format for sending a data file, said format comprising;
an encrypted header data;
a begin marker data, identifying a beginning of said encrypted header data;
a byte count data identifying a number of bytes of said encrypted data;
an encrypted data content portion; and
an unencrypted data content portion.

Further features of the invention are as recited in the claims herein.

### Brief Description of the Drawings

For a better understanding of the invention and to show how the same may be carried into effect, there will now be described with reference to the accompanying drawings by way of example only, specific embodiments, methods and processes according to the present invention in which:
Fig. 1 illustrates schematically a distributed printing system, in which image data files are transferred between computer entities;
Fig. 2 illustrates schematically a first encrypted file format according to a first specific implementation of the present invention;
Fig. 3 illustrates schematically a second encrypted file format according to a second specific implementation of the present invention;
Fig.4 illustrates schematically a header data of the second file format.
Fig. 5 illustrates schematically individual computer entities within the system of Fig. 1, and illustrating components of the computer entities required for handling the file formats with reference to Figs. 2 and 3 herein;
Fig. 6 illustrates schematically components of a printer device adapted for receiving a partially encrypted file according to the first and second file formats.
Fig. 7 illustrates schematically process steps carried out by a sending computer entity for sending a file according to the first file format;
Fig. 8 illustrates schematically process steps carried out by a sending computer entity for sending a file according to the second file format;
Fig. 9 illustrates schematically a file transfer method according to a third specific implementation of the present invention, for transferring files between computer entities;
Fig. 10 illustrates schematically process steps carried out at a receiving entity, for example a printer device, for reconstituting and printing an image data content of a received data file.

### Detailed Description of the Best Mode for Carrying Out the Invention

There will now be described by way of example the best mode contemplated by the inventors for carrying out the invention. In the following description numerous specific details are set forth in order to provide a thorough understanding of the present invention. It will be apparent however, to one skilled in the art, that the present invention may be practiced without limitation to these specific details. In other instances, well known methods and structures have not been described in detail so as not to unnecessarily obscure the present invention.

In this specification, specific implementations are described in which an image data file is partially encrypted.

A common representation of JPEG images is the prior art JPEG file interchange format. This file format consists of a header which is located at the beginning of a file, followed by actual values which are used to decompress and render an image data, subject of the file.

Whilst in the following implementations, there is described the specific example of the JPEG file, the processes and implementations described herein are applicable to a wide variety of file types including video, or audio, and in principle, any object file can be subjected to treatment according to the specific methods disclosed herein.

For large data sizes, for example poster images, which have a relatively high amount of data to be sent across a communications net work such as the internet, content owners may wish to protect that image data against misappropriation, particularly within an e-services environment.

It will be appreciative that a JPEG file constitutes one example of an image data file, and in the following example, various types of image date file such as GIF, or PDF files or other like types of image data file may be substituted.

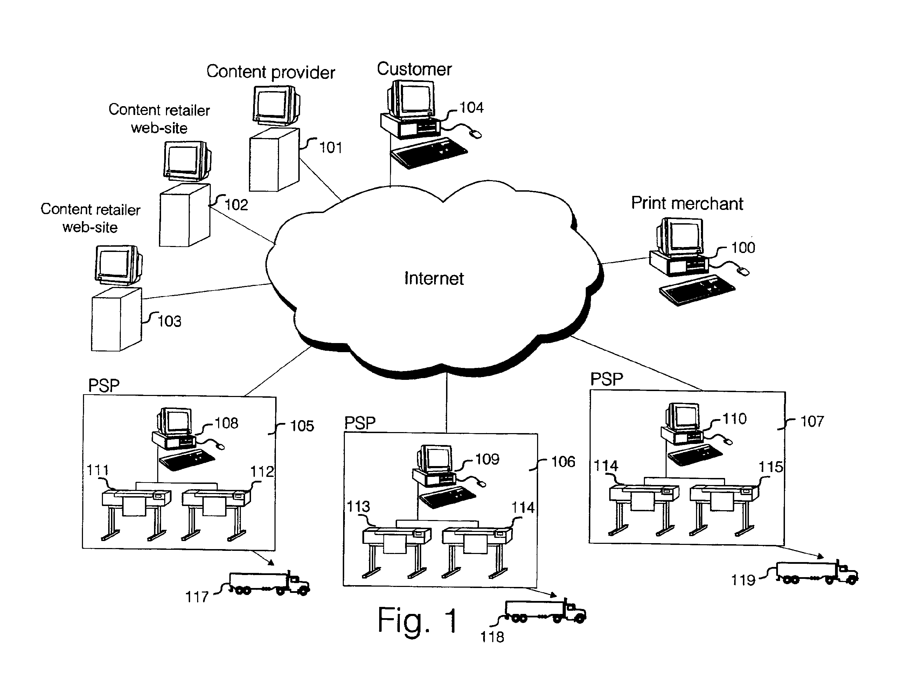

Referring to Fig. 1 herein, there is illustrated schematically a physical architecture of an on-line distributed printing system in which transfer of poster images by JPEG file may be made, according to a novel partially encrypted file format.

The system provides printing services to a plurality of customer terminals 104, in response to a plurality of orders from customers, who may also be the end users. The network comprises a plurality of internet-enabled print service providers 105-107 each capable of providing physical prints in response to orders for printed images; an internet- enabled print merchant computer entity 100 for matching a plurality of orders for print services to the plurality of print service providers 105-107; one or a plurality of internet-enabled content provider computer entities 101 capable of providing image data; a plurality of content retailer computer entities 102, 103, each capable of receiving orders from subscribers, e.g. the general public, for printed images; and one or a plurality of courier service providers 117-119 acting to deliver physical prints to specified end users.

Individual internet-enabled computer entities may be characterized by the function which they provide, as follows:
- A content retailer computer entity 102, 103 provides image content on-line to customers by offering such content via a website. The customers, using personal computers having web browsers may view web pages made available at the content retailer computer entity, and may order on-line prints of those images.
- A content provider computer entity 101, stores a plurality of image data, of interest to individuals and businesses and deliverable on-line. For example, a content provider business may provide a library of pictures, in JPEG data format, stored in a database and made accessible over the internet by a content provider computer entity 101. Content provider computer entity 101 comprises a database storing a plurality of digital image content data representing a plurality of images, and an internet compatible communications interface, making available the digital image content data over a communications link.
- A print merchant computer entity 100, provides a service to business customers, direct retail customers, content retailer websites and content providers, as well as to one or more print service providers. The print merchant computer allows conversion of orders from subscribers to those content retailer businesses into high quality prints which can be sold by the content retailer websites, with print and delivery to end users. The print merchant business handles the printing and delivery service for poster provided by the content retailers. Print service providers are connected to print merchant 100 by their print manager computers, which act as e-servers 108-110. Each e-server allows a plurality of printing devices 111-116 to be connected to the print merchant.
- A print service provider comprises an on-line enabled print manager computer entity 108-110, and one or a plurality of printer devices 111-116, the print manager computer entity capable of receiving orders from the print merchant computer entity on-line, e.g. over the internet, and capable of receiving on-line image data direct from the content provider computer entity, content retailer entity, or print merchant entity.

The means of communication between entities may make use of any suitable communications network or a mixture of network links, including, but not limited to, virtual private networks (VPN's), local area networks (LAN's), wide area networks (WAN's), using any suitable routing and/or transport protocols.

In the environment shown in Fig. 1, files having a large image data content, for example posters, are transferred between entities within the system, and consequently data processing times at receiving computer entities are significant. There is a need to protect the image content data, whilst at the same time minimizing computing resources for applying data protection, throughout the whole system.

In the printing system of Fig. 1, to enhance security of image content throughout the system, a content owner 601 may wish to encrypt or partially encrypt a content data for transmission over in the system. Decryption of the content data preferably occurs as close to the point of actual printing as possible so as to maximize security, and ideally within a printer device 111 to 115. Typically, the printer device has a fixed amount of data processing power, which is primarily used for processing of image data in real time in order to provide a print of an image onto a print media. Therefore, an amount of data processing power available for decryption is limited. Any reallocation of data processing power away from the processing of image data, and to a decryption function, risks slowing down the printing process.

According to specific implementations of the present invention, by encrypting selected portions of the files, the time required to encrypt or decrypt an image file can be greatly reduced, whilst at the same time effectively maintain for practical purposes of a person who may misappropriate an image file, a similar level of security as offered by encrypting an entire image data file.

Three approaches may be taken to encrypting the file.

In a first approach, parts of a data file may be encrypted. In particular, parts of a content data file such as an image data. An encryption algorithm and key length may be set up beforehand between a sending entity and one or more receiving entities. This may be carried out "out of band" that is, not as part of the transmission of the data file. For example, two parties may agree beforehand that all documents will be sent using the prior art Rivest, Shamir, Adleman (RSA) algorithm, or any other known algorithm, with a 2k byte key length. In another example, at a development stage of a system, engineering teams may agree a key length and encryption type.

Alternatively, there may be an out of band agreement on how a key will be acquired. Once this is agreed, then using a prior art standard way of packaging keys, will inform the parties which encryption method is being used.

No header information concerning file type or encryption method needs to be included in the first approach. A receiver of a partially encrypted file needs to recognize or determine that the file is partially encrypted, and apply a predetermined decryption algorithm and key exchange method to decrypt the encrypted parts of the data file, to recover the full unencrypted content data.

In the second approach, only a header data is encrypted. The encrypted header data, in a minimum case would describe:
- an encryption algorithm used, for example RSA; and
- A key length used for example 1024 or 2048 bytes.

Optionally, the encrypted header data may also include data specifying a file or file format, for example a JPEG file header in the case of a JPEG image file.

In a third approach, randomly selected blocks of image data from a file may be encrypted, in addition to encrypting the file header. The selection of the portions of the image data to be encrypted may be based on a randomly generated byte pattern, which can be used to index to specific blocks of the image data. The block size for encryption must be predetermined, and is the same for each block.

In a variation of the third approach implementation, rather than having a predetermined block size for encryption, the block size can be made to vary. In this implementation, the encryption header includes a map of which blocks have been encrypted, and corresponding block links. A format for such a block map may include details of:
- Block off set
- Block links.

The header data and image data need not be encrypted using the same encryption algorithm, nor the same encryption keys. In this case, a portion of the header describing the blocks which have been encrypted may carry its own information regarding an encryption format used for encryption of the image data blocks.

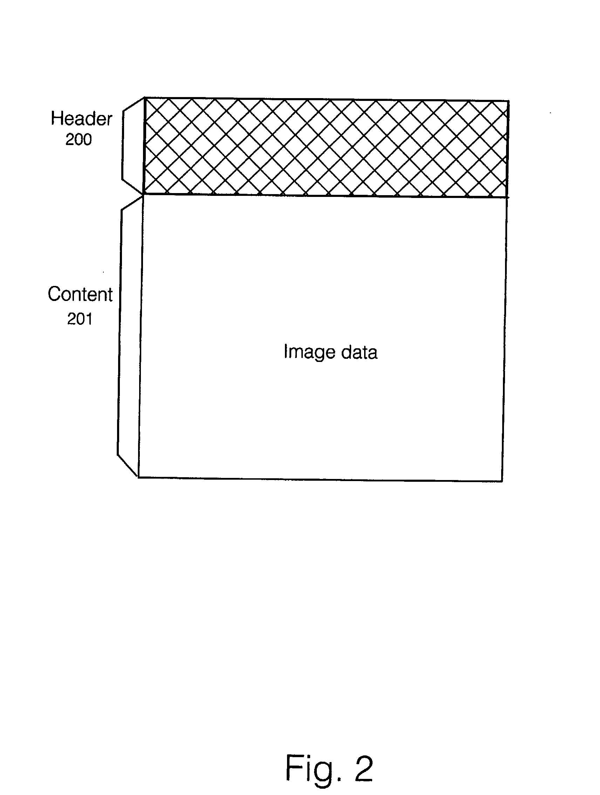

Referring to Fig. 2 herein, there is illustrated schematically a first image data file format according to a first specific implementation of the present invention. The image data file comprises a header portion 200 and content data portion 201 containing image data. Typically, the header portion 200 has a much lower data size, i.e. much lower number of bytes, than the content data portion 201. The header data 200 is encrypted according to a known encryption algorithm, whereas the image content portion 201 remains unencrypted.

Typically, the image content data may be in the range 1 megabyte to 100 megabytes or greater.

A person receiving the image data file of Fig. 2, in order to access the image data, needs to read the header data. Because the header data is encrypted, this requires a decryption algorithm at a receiving computer entity, in order to decrypt the header data. Operation of the decryption algorithm requires a finite data processing capability at the receiving computer entity. However, because only the header data has been encrypted, and the header data is relatively small in size compared to the number of bytes of the content data, the amount of data processing capacity required at the receiving end is low, relative to that which would be required if the whole data file including the content data were encrypted. By encrypting the header data, access to the unencrypted content data is protected, since the receiving computer entity cannot determine the format in which the image data is encrypted.

The implementation as illustrated in Fig. 2 herein, represents a relatively low level of security for the content data, since a person misappropriating the file has access to unencrypted content data. It may be possible for a person to remove the encrypted header data, and work out by a brute force computing approach, which type of file format, from a number of known file formats, for example PDF, JPEG, GIF and the like, the content image data is provided in. Therefore, the solution described in Fig. 2 provides an intermediate level of protection between full encryption, and between no encryption at all of a large content image data file.

The encryption algorithm used may be a known encryption algorithm, for example the known RSA, or known defense encryption standard (DES) encryption algorithms. A wide range of encryption algorithms are known in the art, and can be obtained from the American National Standards Institute (ANSI), the Institution of Electrical and Electronic Engineers (IEEE), and the published conference proceedings of Crypto and Eurocrypt, published by Springer-Verlag.

The header data comprises data identifying an encryption algorithm or encryption method used, and a key length used for encryption, for example 1024 or 2048 bytes. Optionally, and depending upon the format of the image data file, the header may also comprise a header of the particular file format for example a JPEG header including details of values which are used for decompression of the image data.

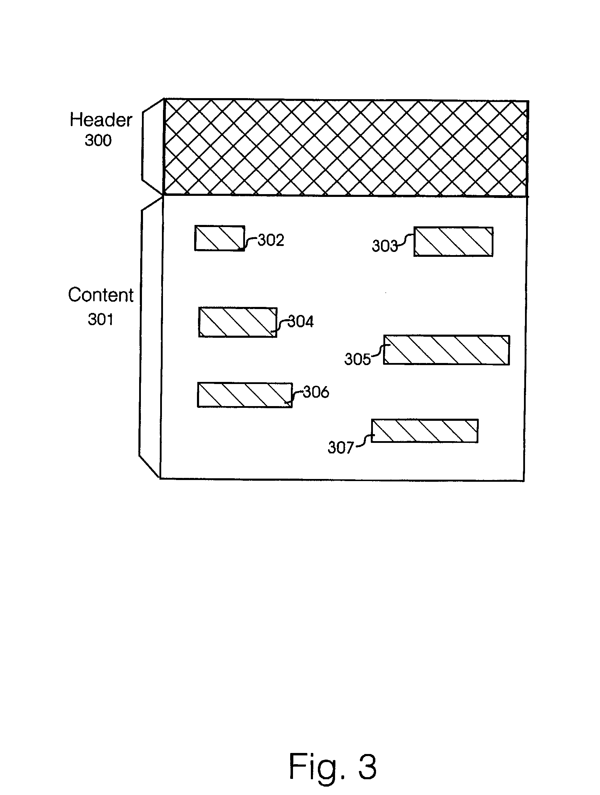

Referring to Fig. 3 herein, there is illustrated schematically a second file format according to a second specific implementation of the present invention. The second file format comprises a header data 300 and a content data 301. The content data 301 typically comprises image data content of a size 1 megabyte to 100 megabytes, but may be larger. In the second file format, header data 300 is encrypted using a known encryption algorithm. The content data 301 comprises image data in a standard or proprietary format, e.g. GIF, JPEG, PDF or the like. A plurality of blocks of the content data 301 are encrypted as shown by shaded regions 302-307 in Fig. 3.

The size, number and encryption method applied to data blocks in the content data and the header data can be varied as follows:
- Each encrypted block in the content data may be encrypted using a same algorithm.
- Alternatively, different encryption methods each having a corresponding encryption key may be used to encrypt a plurality of different selected data blocks within the content data.
- One or more encrypted blocks of the content data may be encrypted using a same encryption algorithm and same encryption key as that used for the header data 300.
- One or more encrypted blocks 302 in the content data may be encrypted using a different encryption algorithms and different decryption key to those used to encrypt the header data 300.
- In the general case, any number *n* of encryption algorithms may be used to encrypt any number *n* of encrypted blocks within the content data portion 301, and one or more of those encrypted content blocks may use a same encryption algorithm and/or same encryption key as an encryption algorithm and encryption key used to encrypt the header portion 300, or all encryption algorithms and encryption keys used to encrypt the encrypted content sections in the content data may be different to an encryption algorithm and/or encryption key used to encrypt the header data 300.
- The size of the blocks selected for encryption may be predetermined, or may be randomly selected each time a different file is encrypted.
- Contained within the encrypted headed data, a map of the data blocks which have been encrypted may be provided, giving the location of those data blocks as a data section off set from a start of the content data, and a data block size for each encrypted data block.

A person or computer entity misappropriating a partially encrypted file as disclosed in Fig. 3 is faced with several barriers in order to obtain a full image content data. Firstly, they must decrypt the header 300 in order to find out the file format. Secondly, they must identify which portions of the content data are unencrypted image portions and which portions are encrypted image portions. Thirdly, they must identify an encryption method and key for each encrypted section, in order to decrypt the content data within that encrypted block in order to obtain a full-unencrypted image data.

Persons misappropriating the file may be able to strip off the encrypted header 300, and identify the type of image file, by a brute force computing solution, which may enable them to access the unencrypted portion of the image data, minus the encrypted sections. However, the image data obtained by such an exercise will still leave large gaps in the image data, which as a practical matter, where the image comprises for example a poster, will mean that the usefulness of that acquired image data is severely degraded, in particular, to the point where it is commercially useless to the person misappropriating the image data, because large areas of the image are blurred and unintelligible. Since blocks of data are encrypted, access to a complete poster image is prohibited by virtue of the encrypted blocks contained within the image data.

Selection of particular blocks of image data may be made randomly, or according to a predetermined pattern. Whether selection of random blocks or a pattern of blocks is made, may be a user configurable option, at the point of encryption.

The particular parts of the file which are encrypted may be selectable by a content owner, depending upon the sensitivity of the file, and the content owners preference for security level applied to the file. For example, where the file is a JPEG file, the JPEG header may be selected so as to be encrypted, so that a potential hacker would not even be able to tell that the file is a JPEG file. However, in other instances, the JPEG header may be left unencrypted, in cases where it is irrelevant whether a person misappropriating the file knows that the file is a JPEG file, as long as there is part of the file that is encrypted, i.e. part of the content data, which makes that file practically useless to the acquirer.

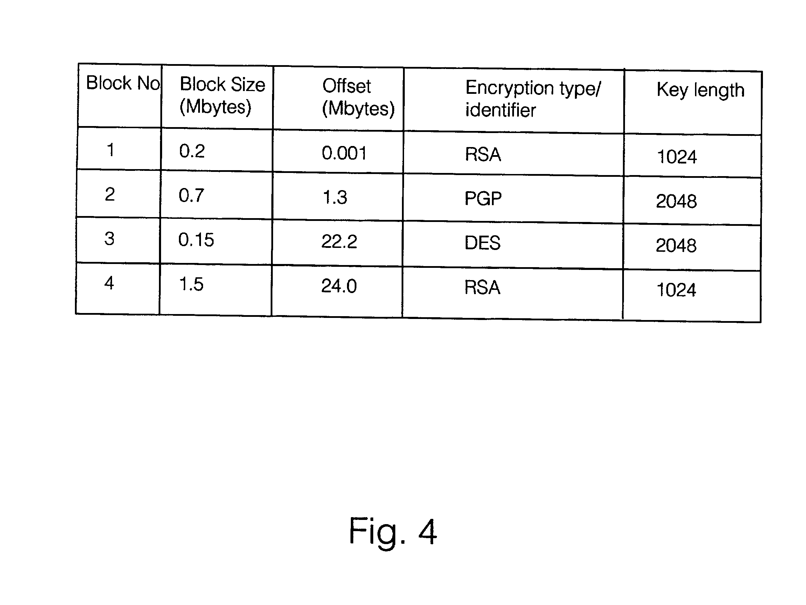

Referring to Fig. 4 herein, there is illustrated schematically a data table, comprising the header portion of the second file format. The data table comprises data types include a block identifier 400 for example a numbering scheme for encrypted data blocks; a size in megabytes of each data block; position information for each encrypted data block, in the form of a number of bytes offset from the start of the content data section; an encryption type identifier data used to identify a type of encryption used for each data block; and a key length data for identifying a key length used for each encryption type.

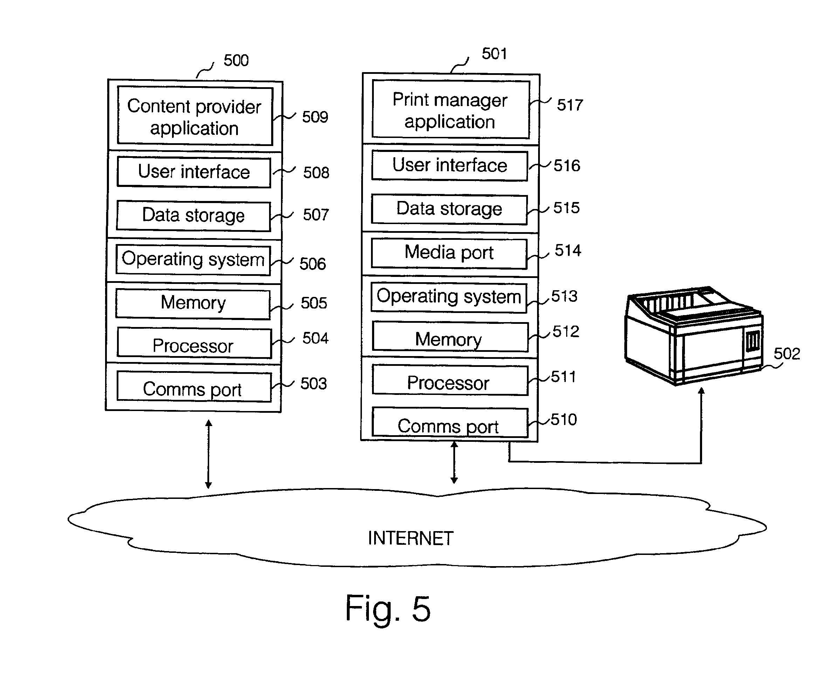

Referring to Fig. 5 herein, there is illustrated schematically components of individual computer entities illustrated in Fig. 1, for encrypting and decrypting image content files according to a second specific implementation of the present invention.

The computer entities comprise a content provider computer 500, a print manager computer entity 501; and a printer 502.

Content provider computer 500 comprises communications port 503, a processor 504, with associated memory 505, a conventional operating system 506, a data storage device 507 and user interface 508 including a visual display unit, keyboard and pointing device, and a content provider application 509, which includes an encryption algorithm for encrypting data files as described herein.

Print manager computer entity 501 comprises a communications port 510 for communicating with other computer entities on-line; a processor 511; memory 512, including random access memory and read only memory; an operating system 513, e.g. Linux®, Unix®, Windows NT/Windows 2000®; a data storage media port 514, such as a DDS tape port, CDRom player or DVD player enabling the print manager computer to receive a file data on physical data storage media input into the physical media port of the print manager computer, a data storage device 515 e.g. hard disk drive, RAID array or the like; a user interface 515 enabling a human operator to interact with the print manager computer, the user interface comprising a visual display unit, keyboard and a pointing device, e.g. a mouse, trackball or similar; and a print manager application 517 acting as a e-server for communicating with print merchant computer entity and for controlling locally one or a plurality of printer devices 502 and other resources within a print service provider facility.

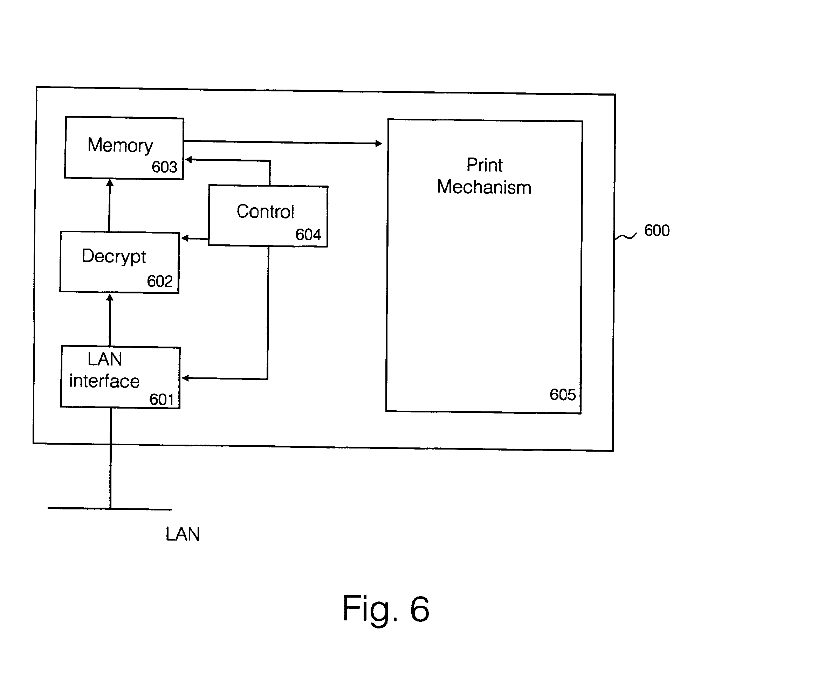

Referring to Fig. 6 herein, there is illustrated schematically components of a printer, adapted for receiving a partially encrypted file in a format as described herein before. The printer device 600 comprises a local area network interface 601 for receiving encrypted and unencrypted data from a print manager computer; one or more decryption algorithms 602 for decrypting encrypted sections of a received file; a memory device 603 for locally storing and constituting an unencrypted data file from the encrypted and unencrypted received section; a control component 604, for controlling a printer and a print mechanism 605 for printing an image to a physical print media.

The interface, decryption component, memory component and control component 604 may be provided as discreet components in firm ware, or may be provided as a conventional data processor and memory, adapted by means of computer program to perform interface, decryption and control functions.

Since encryption of parts of the content data requires a corresponding amount of data processing power at a receiving computer entity or at a printer device, there is a trade off between the level of security applied to the content data, and the data processing power required at the receiving end in order to apply decryption. For a particular file size, the higher the proportion of the content data which is encrypted, the higher the security, but also, the receiving entity data processing power requirement increases correspondingly. Conversely, for the same file size and decryption time, reduction in the data processing power requirement in millions of instructions per second (MIPS) at the receiving computer entity is achievable by reducing the proportion of content data which is encrypted. Trade offs between the absolute amount of content data encrypted, the amount of content data encrypted relative to the total content data size; the encryption time at a sending computer entity; a decryption time at a receiving computer entity, a data processing power available at the sending computer, and a data processing power available at one or more receiving computer entities can be traded off and optimized against one another within a system. For a fixed amount of computing resource at the receiving end, the trade off is of security against utilization of computing resources, with the consequences of the trade off being increase or decrease in security, and increase or decrease in encryption and decryption times.

In the system of Fig. 1, considering the relatively large file sizes of typically 1 to 100 megabytes, such files can experience delays in traversing the communications network between a content provider entity and other entities in the network, culminating in delivery at the print service provider. Encrypting the large file does not significantly reduce the overall file size, particularly where the JPEG format is used, since this already includes a level of compression in any case. Therefore, as an alternative to electronic transmission over a communications network, a file or part of a file can be loaded onto a data storage media, such as a CD-ROM or DVD, and be physically delivered to a print service provider instead of being delivered by electronic transmission over a communications network.

Therefore, in one variation an unencrypted part of the data image could be delivered by physical data storage media such as DVD, and an encrypted part of the image could be delivered over a communications network, the full image being recoverable only by combining the unencrypted portion with a decrypted version of the encrypted file received over the communications network.

This variation may be useful where transmission times are not critical and a delay in receiving a physical data storage media through the post can be tolerated, but where data processing power at the receiving computer is limited, and time taken to print an image needs to be minimised, and utilisation of data processing power at a printer device for the purpose of decryption needs to be minimised, for example in a print service provider where many print jobs are being carried out, and utilisation of printer devices needs to be optimised.

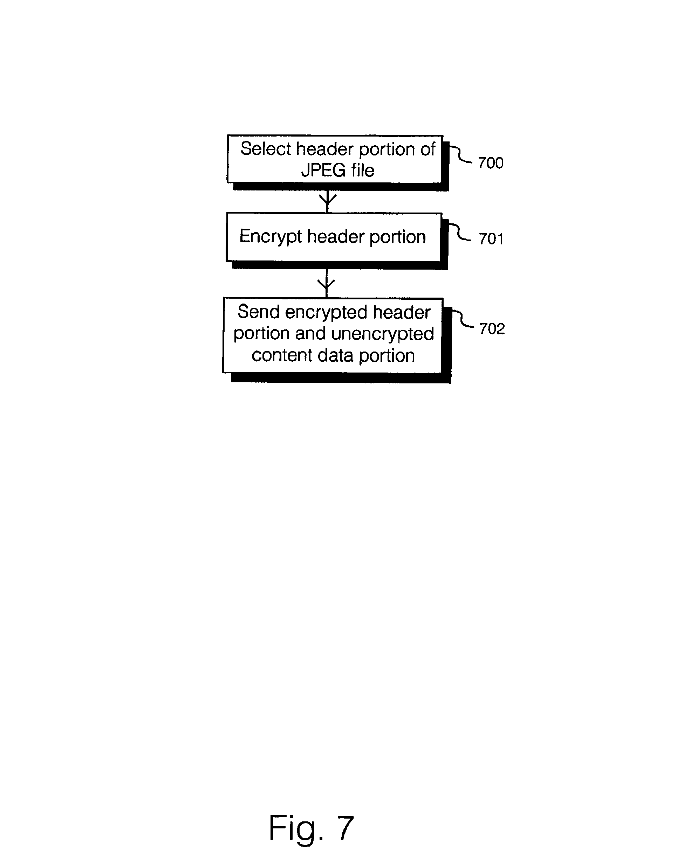

Referring to Fig. 7 herein, there is illustrated schematically process steps carried out by a sending computer entity for sending a data file according to a format disclosed herein. In process 700, the sending entity creates a header data for the file, the header data comprising data describing a type of encryption method used, for example specifying an encryption algorithm, and specifying a key length. In process 701 the header portion is encrypted, and in process 702 the encrypted-headed portion is sent to a destination computer entity. A remaining unencrypted content data portion of the file is also sent to the destination computer. Sending of the encrypted header portion and unencrypted content data portion preferably occur in this example as a same transmission made electronically.

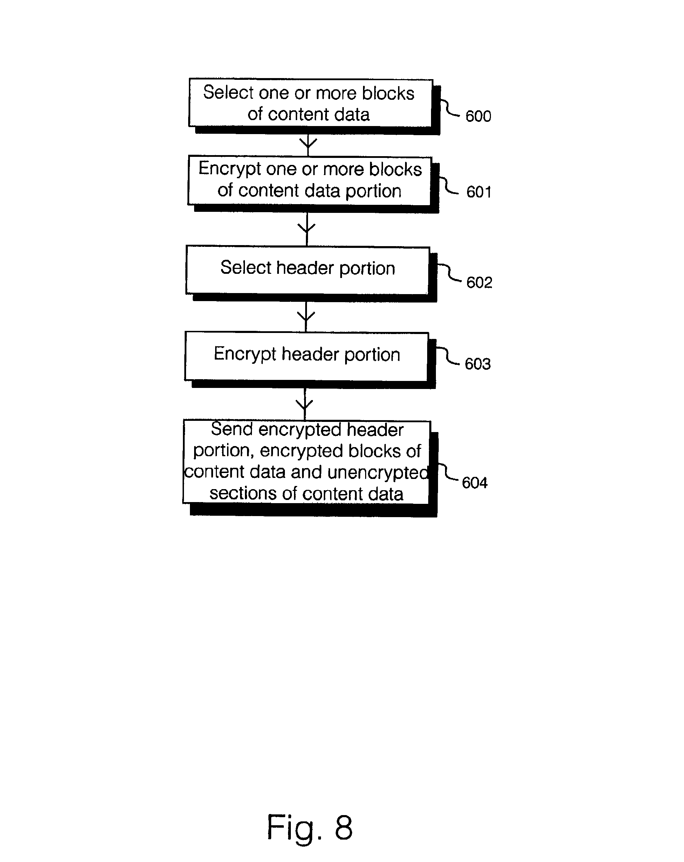

Referring to Fig. 8 herein, there is illustrated schematically process steps for creating and sending a partially encrypted data file according to the second file format disclosed herein. In process 800 one or more sections of the content data portion are selected for encryption. In process 801, each of the selected blocks are encrypted. Encryption may be applied using a same encryption process for each section or using different encryption methods for each section. In process 802 a header portion is generated. The header portion comprises a list of selected data blocks, together with encryption keys for those data blocks, and encryption methods used for each data block, preferably together with data describing a position of an encrypted data block within the content data. Additionally, the header portion may be assembled to include an existing header portion of an existing file type, for example a JPEG file. In process 803 the header portion is encrypted. In process 804 the encrypted header portion is sent to a destination entity, together with the encrypted blocks of content data, and an unencrypted section of the content data.

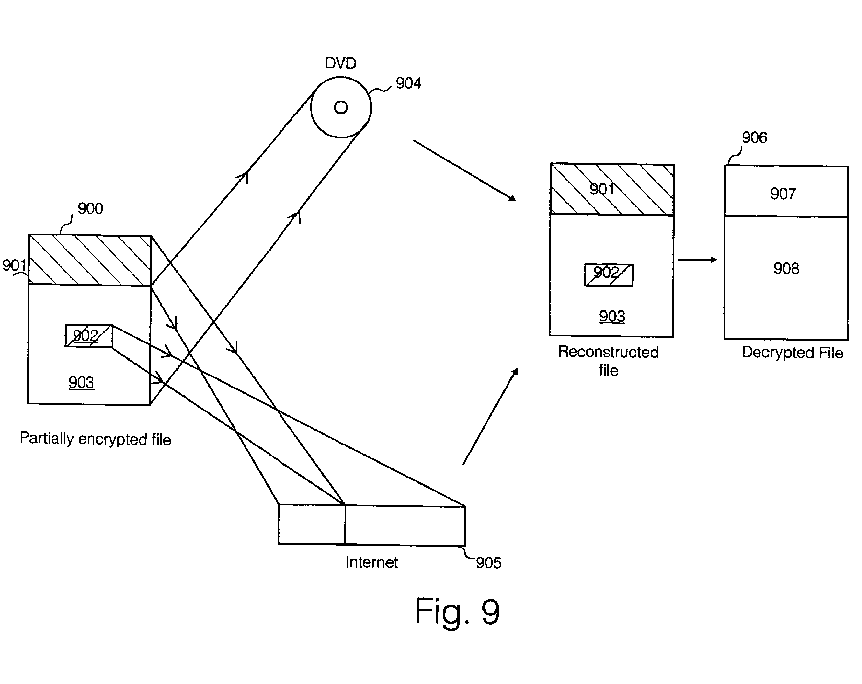

Referring to Fig. 9 herein, there is illustrated schematically a second specific method of file delivery according to a second specific implementation of the present invention. A data image file 900 is partially encrypted, by encrypting a first header portion 901 and optionally, one or more data blocks 902 of an image content data 903. The unencrypted image content data 703 is stored on a physical data storage medium 904, for example a CD-ROM or DVD. The encrypted file portions, including the header data and, optionally one or more encrypted data blocks 902 from the image content data are transmitted as an electronic file 905, to a receiving computer entity. The unencrypted physical image content data arriving on the physical data storage media by surface mail may be sent to the location of the receiving computer entity at some time before delivery of the electronic encrypted data file 905.

At the receiving computer entity, the unencrypted image content data 903 is stored locally on a data storage device, and the encrypted portion is decrypted at a printer device, and reconstituted with the unencrypted image content data, to give a fully decrypted file 906 having a decrypted header data 907 and decrypted image content data 708 in a form ready for raster image processing and physical printing at a printer device.

Decryption of the encrypted header portion 901 and, if present, encrypted blocks 902 of the image content data is carried out as close a possible to the point of final printing, ideally within the printer device itself.

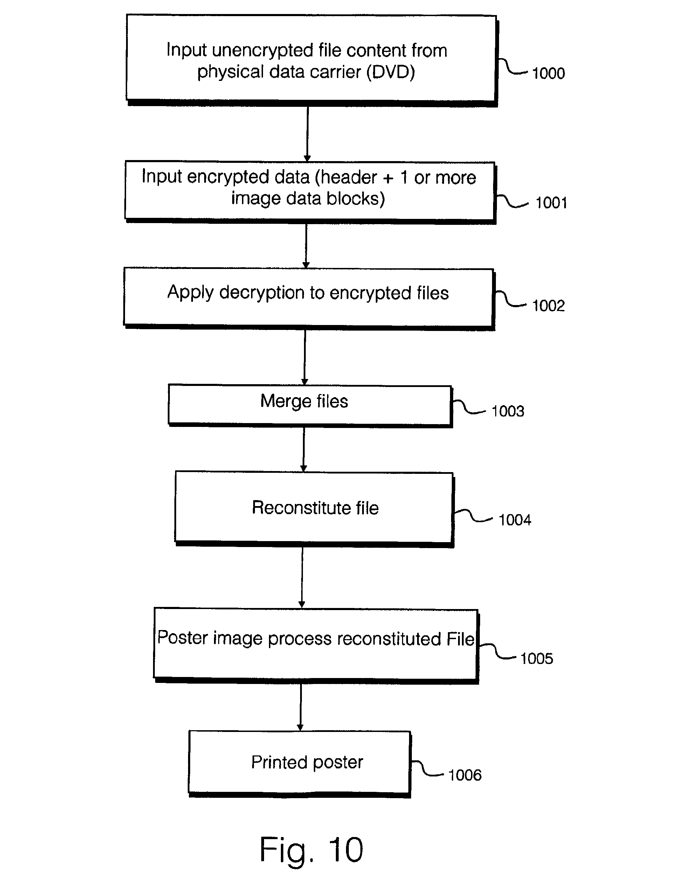

Referring to Fig. 10 herein, there is illustrated schematically processes carried out at a receiving printer device for printing a physical image to a print media, where the image is received as unencrypted data on a physical data storage media and as an encrypted file over a communications network. In process 1000, an unencrypted file content, typically an image data or a part image data is loaded from a received physical data storage carrier, for example a DVD carrier. The unencrypted data may be input in real time, as required by an algorithm within the printer, or may be loaded into a data storage device comprising or attached to the printer device. In process 1001, the printer device receives an encrypted data file, comprising an encrypted header and optionally one or more encrypted image data blocks. In process 802 the printer applies a decryption algorithm to the encrypted header and one or more encrypted data blocks from the image content data by a prior art decryption algorithm. In process 1003, the unencrypted image data portion, and the decrypted file portions resulting from decryption of the header data and optionally one or more encrypted image data blocks are reconstituted, resulting in a fully unencrypted reconstituted file having a header data and an image content data, for example in the JPEG format. This file is then raster image processed in process 1005 as is known in the prior art, resulting in a printed physical poster 1006.

Specific implementations according to the present invention may have an advantage of reducing the time required and hence the computing power required to apply decryption security to an image file, for example a JPEG file by focussing solely on the parts of the file which are critical for rendering an image.

For relatively large image files, reduction of the time delay and computing power required to decrypt the image may allow for incorporation of a decryption phase at the actual point of rendering, for example inside a printer, without unnecessarily decreasing printer performance or increasing the printer costs.

In the foregoing examples, in some implementations a header data is encrypted whereas in others it is not. There are cases where the header data may be of a fixed length, and other cases where the header data may be of a variable length, according to a variable length format. Where the header data is encrypted, the encrypted bytes comprising the header data need to be identified, so that they can be decrypted by a receiving device.

Encrypting a first number N bytes of data may result in a second number M bytes of encrypted data, where either M can be equal to N, M can be less than N, or M can be greater than N. In order to properly decrypt an encrypted header data block, it needs to be determined which bytes comprise the encrypted block, so that at the receiving end, the encrypted block can be identified and then decrypted. This may cause problems in the case where the number of bytes of encrypted data M is not equal to the number of bytes of unencrypted header block data N.

To identify the encrypted header block, there are various options as follows.

In the case of a variable length header data, a data describing the header length can form part of the header itself, the header length data being located in a pre-determined position according to a file transfer format or protocol.

Alternatively, the header can be identified by means of a "begin header" marker data and an "end header" marker data. This approach is used with known JPEG files.

When a header data is encrypted, its length may be changed, and in order to decrypt it properly, it is necessary to identify the encrypted bytes. According to a further implementation of the present invention, a header data is provided which at minimum identifies the encrypted header bytes. A specific example comprises a begin marker data, and an end marker data. This may be implemented as shown in the following example of pseudo code:

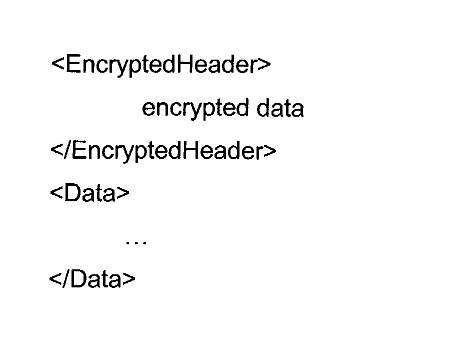

Where the <data> block may or may not contain encrypted data depending on the mode of the invention employed. This format for sending a data file comprises an encrypted header data, a begin header data marker identifying a beginning of said encrypted header data; an end header data marker identifying an end of said encrypted header data ; a portion of encrypted content data; and a portion of unencrypted content data.

In a further implementation, it may be indicated a number of bytes to be decrypted, where the starting point is well identified. For example:

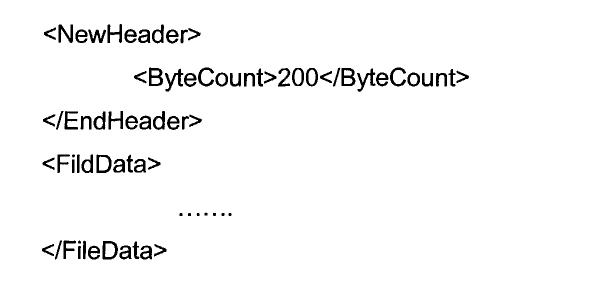

This format for sending a data file comprises an encrypted header data; a begin marker data, identifying a beginning of said encrypted header data; a byte count data identifying a number of bytes of said encrypted data; an encrypted data content portion; and an unencrypted data content portion.

## Claims

1. A method for applying security to a data file said data file comprising a content data portion;
said method comprising:
selecting at least one section of said data file; and
applying at least one encryption algorithm to said at least one selected data section to obtain at least one encrypted data section, and at least one remaining unencrypted data section; and
sending said at least one encrypted data section, and sending said at least one remaining unencrypted data section.

2. The method as claimed in claim 1, wherein said data file further comprises a header portion, and
said header portion contains data describing at least one encryption algorithm applied to said encrypted data section and at least one key length of a key for said encryption algorithm.

3. The method as claimed in claim 1, comprising:
sending said at least one unencrypted data section of said data file; and
sending said at least one encrypted data section of said data file.

4. The method as claimed in any one of the preceding claims, wherein:
said selected data section to which encryption is applied comprises a said header portion of said data file.

5. The method as claimed in any one of the preceding claims, wherein:
said selected data section is randomly selected from within a content data portion of said data file.

6. The method as claimed in any one of the preceding claims, wherein;
a plurality of said data sections are selected from a content data portion of said data file, each said data section having a predetermined size.

7. The method as claimed in any one of the preceding claims, wherein:
a plurality of said data sections are selected, and
said plurality of selected data sections are selected according to a predetermined pattern within a content data section of said data file.

8. The method as claimed in any one of the preceding claims, wherein:
said data file comprises a header portion and a content data portion; and
said header portion comprises data describing a position within said data file of at least one said encrypted data section.

9. The method as claimed in any one of the preceding claims, wherein:
said data file comprises a header portion and a content data portion; and
said header portion comprises data describing a length of at least one said encrypted data section, within said data file.

10. The method as claimed in any one of the preceding claims, wherein said step of sending said at least one unencrypted data section comprises:
transmitting said unencrypted data section over a communications network.

11. The method as claimed in any one of the preceding claims, wherein said step of sending at least one unencrypted data section comprises:
loading said unencrypted data section onto a data storage medium; and
physically transporting said data storage medium to a destination.

12. The method as claimed in any one of the preceding claims, wherein said step of sending at least one encrypted data section comprises:
transmitting said at least one encrypted data section over a communications network.

13. The method as claimed in any one of the preceding claims, wherein said step of sending at least one encrypted data section comprises:
loading said encrypted data section on to a physical data storage medium; and
physically transporting said data storage to a destination.

14. The method as claimed in any one of the preceding claims, wherein said data file comprises:
a header portion describing a file type of said data file; and
a content data portion comprising a content data payload of said data file.

15. The method as claimed in any one of the preceding claims, wherein:
said step of selecting at least one section of said data file comprises selecting a header portion of said data file; and
said step of applying at least one encryption algorithm to said header portion.

16. The method as claim in claim 1, wherein said data file further comprises a header portion, wherein said header portion comprises:
a begin marker identifying a beginning and said header data;
a block of encrypted header data;
an end marker identifying an end of said encrypted header data.

17. The method as claimed in claim 1, wherein said data file further comprises a header portion, wherein;
said header portion comprises an encrypted header data;
said header portion is identified by a begin header marker; and
a byte count data identifies a number of bytes of encrypted header data following a position indicated by said begin marker.

18. A method for secure management of a data file, said data file comprising a header portion and a content data portion, said header portion containing data describing at least one encryption type, said method comprising:
reading said header portion and extracting said data describing said encryption type;
receiving at least one unencrypted section of said data file;
receiving at least one encrypted section of said data file;
decrypting said received at least one encrypted section of said data file according to an encryption type specified in said header data; and
combining said decrypted at least one section of said data file with said at least one unencrypted section of said data file, to obtain a full unencrypted version of said data file;
wherein said header portion contains data describing at least one encryption algorithm applied to said encrypted data section and at least one key length of a key for said encryption algorithm.

19. The method as claimed in claim 16, wherein said step of receiving at least one unencrypted data section comprises:
reading said unencrypted section from a physical data storage media.

20. The method as claimed in claim 16 or 17, wherein said step of receiving at least one unencrypted section comprises:
receiving an electronic version of said unencrypted version of said unencrypted section over a communications network.

21. The method as claimed in any one of claims 16 to 18, wherein said step of receiving at least one unencrypted section comprises:
downloading said unencrypted section from a physical data storage media.

22. The method as claimed in any of claims 16 to 19, wherein said step of receiving at least one unencrypted section comprises:
receiving an electronic version of said unencrypted version of said unencrypted section over a communications network.

23. The method as claimed in any one of claims 16 to 20, wherein said step of decrypting said at least one encrypted section comprises:
applying a plurality of decryption algorithms to a plurality of said encrypted sections.

24. A method for secure management of an image data file, said method comprising:
selecting at least one section of an image data file;
applying at least one encryption algorithm to said at least one selected data section to obtain at least one encrypted data section and at least one remaining unencrypted data section;
sending said at least one unencrypted data section of said image data file;
sending said at least one encrypted data section of said image data file;
wherein a header portion of said file contains data describing at least one encryption algorithm applied to said encrypted data section and at least one key length of a key for said encryption algorithm.

25. A method of file management for secure management of an image data file, said method comprising:
receiving at least one unencrypted section of said image data file;
receiving at least one encrypted section of said image data file;
decrypting said received at least one encrypted section of said image data file;
combining said decrypted at least one section of said image data file with said unencrypted section of said image data file;
wherein a header portion of said data file contains data describing at least one encryption algorithm applied to said encrypted data section and at least one key length of a key for said encryption algorithm.

26. The method as claimed in claim 23, further comprising:
raster image processing said combined at least one decrypted section and said at least one unencrypted section to obtain a raster image processed file; and
printing a data content of said raster image processed file onto a print media.

27. Apparatus for applying securing to a data file, said apparatus comprising:
at least one data processor; and
at least one memory device;
said apparatus operable for:
selecting at least one section of said data files;
applying at least one encryption algorithm to said at least one selected data section to obtain at least one encrypted data section and at least one remaining unencrypted data section;
sending said at least one unencrypted data section of said data file to said output interface; and
sending said at least one encrypted data section of said data file to said output interface;
wherein a header portion of said data file contains data describing at least one encryption algorithm applied to said encrypted data section and at least one key length of a key for said encryption algorithm.

28. An apparatus for secure management of a data file, said apparatus comprising:
at least one processor;
at least one memory device; and
an input interface;
said apparatus operable for:
receiving at least one unencrypted section of said data file;
receiving at least one encrypted section of said data file;
applying a decryption algorithm to said received at least one encrypted section of said data file, to obtain a decrypted section of said data file; and
combining said at least one decrypted section of said data file with said unencrypted section of said data file, to obtain a full unencrypted version of said data file;
wherein a header portion of said data file contains data describing at least one encryption algorithm applied to said encrypted data section and at least one key length of a key for said encryption algorithm.

29. A printer device capable of secure management of an image data file, said printer apparatus comprising:
an input interface for receiving at least one said image data file;
at least one data processor;
at least one memory device;
a raster image processor; and
a print mechanism;
said printer device operable for:
receiving at least one unencrypted section of said image data file;
receiving at least on encrypted section of said image data file;
decrypting said received at least one encrypted section of said image data file to obtain a decrypted section; and
combining said at least one decrypted section of said image data file with said at least one unencrypted section of said image data file to obtain an unencrypted version of said data file;
raster image processing said full unencrypted version of said data file to obtain a raster image processed file; and
printing a data content of said raster image processed file onto a print media;
wherein a header portion of said data file contains data describing at least one encryption algorithm applied to said encrypted data section and at least one key length of a key for said encryption algorithm.

30. A method for secure management of a data file, said method comprising;
selecting at least one section of a said data file;
applying at least one encryption algorithm to said at least one selected data section to obtain at least one encrypted data section and at least one remaining data section;
sending said unencrypted at least one data section of said data file;
sending said at least one encrypted data section of said data file;
receiving said at least one unencrypted section of said data file;
receiving said at least one encrypted section of said data file;
decrypting said received at least one encrypted section of said data file to obtain a decrypted section of said data file;
combining said at least one said decrypted section of said data file with said at least one unencrypted section of said data file to obtain a full unencrypted version of said data file;
wherein a header portion of said data file contains data describing at least one encryption algorithm applied to said encrypted data section and at least one key length of a key for said encryption algorithm.

31. A system for applying security to a data file, said system comprising:
at least one sending entity, for sending a data file to which securing has been applied;
at least one receiving computer entity for receiving said data file, and for removing said security from said data file;
said sending computer entity comprising:
at least one data processor; and
at least one memory device; and
at least one output interface for output of said data file,
said sending computer entity operating for:
selecting at least one section of said data file;
applying at least one encryption algorithm to said at least one selected data section to obtain at least one encrypted data section and at least one remaining unencrypted data section;
sending said at least one unencrypted data section of said data file via said output interface; and
sending said at least one encrypted data section of said data file via said output interface;
said receiving computer entity comprising:
at least one data processor;
at least one memory device; and
at least one input interface;
said receiving computer entity operating for:
receiving said at least one unencrypted of said data file;
receiving said at least one encrypted section of said data file;
decrypting said received at least one encrypted section of said data file to obtain a decrypted section of said data file; and
combining said decrypted so that at least one said decrypted section of said data with said at least one unencrypted section of said data file to obtain a full unencrypted version of said data file;
wherein a header portion of said data file contains data describing at least one encryption algorithm applied to said encrypted data section and at least one key length of a key for said encryption algorithm.

32. The system as claimed in claim 29, wherein said receiving computer entity comprises a printer device;
said printer device operating to:
raster image process said combined at least one decrypted section and said at least one decrypted section and said at least one unencrypted section to obtain a raster image processed file; and
print a data content of said raster image processed filed onto a print media.

33. A data file comprising:
a header portion; and
a content data portion;
wherein said data file comprises at least one encrypted section and at least one unencrypted section;
wherein said header portion contains data describing at least one encryption algorithm applied to said encrypted data section and at least one key length of a key for said encryption algorithm.

34. A data file as claimed in claim 31, comprising a JPEG image file.

35. An image data file comprising:
a header portion, describing a format of said data file;
a data content section comprising a payload data of said image data file;
wherein at least one section of said data file is encrypted, and
at least one section of said data file remains unencrypted;
wherein said header portion contains data describing at least one encryption algorithm applied to said encrypted data section and at least one key length of a key for said encryption algorithm.

36. The image data file as claimed in claim 33, wherein said header portion comprises said encrypted section.

37. The image data file as claimed in claim 33 or 34, wherein said content data portion comprises at least one encrypted section.

38. The image data file as claimed in any one of claims 33 to 35, comprising a plurality of encrypted data sections.

39. The image data file as claimed any one of claims 33 to 36, comprising a plurality of encrypted data sections, wherein each said encrypted data section is encrypted according to a different encryption method.

40. The image data file as claimed in any one of claims 33 to 37, comprising a plurality of encrypted data sections, wherein each said encrypted data section is encrypted according to a different encryption key.

41. A data storage medium, said data storage medium containing:
a header portion, describing a format of said data file;
a data content section comprising a payload data of said image data file;
wherein at least one section of said data file is encrypted, and at least one section of said data file remains unencrypted;
wherein said header portion contains data describing at least one encryption algorithm applied to said encrypted data section and at least one key length of a key for said encryption algorithm.

42. A format for sending a data file, said format comprising;
an encrypted header data;
a begin header data marker identifying a beginning of said encrypted header data;
an end header data marker identifying an end of said encrypted header data;
a portion of encrypted content data; and
a portion of unencrypted content data.

43. A format for sending a data file, said format comprising;
an encrypted header data;
a begin marker data, identifying a beginning of said encrypted header data;
a byte count data identifying a number of bytes of said encrypted data;
an encrypted data content portion; and
an unencrypted data content portion.
